# FASCICULE DE BREVET EUROPEEN

(11) **EP 3 008 772 B1**
(45) Date de publication et mention de la délivrance du brevet: **13.09.2017**
(21) Numéro de dépôt: 14729347.6
(22) Date de dépôt: 11.06.2014
(51) Int. Cl.: H01M 2/10, H01M 10/6555, H01M 10/613, F28D 15/02, F28D 15/04, H01M 10/6551, H01M 10/625, H01M 10/6552, H01M 10/6563

(54) **BLOC BATTERIE POUR VÉHICULE AUTOMOBILE**
BATTERIEPACK FÜR EIN KRAFTFAHRZEUG
BATTERY PACK FOR A MOTOR VEHICLE

(30) Priorité: 13.06.2013 FR 1355505
(43) Date de publication de la demande: 20.04.2016
(73) Titulaire: Compagnie Générale des Etablissements Michelin, 63000 Clermont-Ferrand (FR)
(72) Inventeur: WALSER, Daniel, F-63040 Clermont-Ferrand Cedex 9 (FR); FRAGNIERE, Bruno, F-63040 Clermont-Ferrand Cedex 9 (FR)
(74) Mandataire: Roussy, Delphine
(86) Numéro de dépôt international: PCT/EP2014/062136
(87) Numéro de publication internationale: WO 2014/198778

(56) Documents cités:
- CN-A- 101 958 440
- DE-A1- 19 724 020
- JP-A- H0 745 310
- JP-A- S61 260 551
- JP-A- 2006 210 245
- JP-A- 2009 147 187
- US-A1- 2011 206 965

## Description

### DOMAINE DE L'INVENTION

La présente invention concerne un bloc batterie pour véhicule, en particulier pour véhicule automobile. Plus précisément, la présente invention concerne un bloc batterie comprenant plusieurs modules de batterie, et présentant un compromis masse / efficacité / encombrement visant à améliorer les performances des batteries actuelles.

Les véhicules automobiles à moteur thermique sont, depuis longtemps, munis de batteries électriques utilisées notamment pour permettre le démarrage du véhicule, et pour fournir au véhicule l'énergie électrique nécessaire lors d'un arrêt moteur pour maintenir certaines fonctionnalités tells que les phares, les feux de détresse, l'électronique embarquée.

Avec le développement des véhicules électriques et des véhicules hybrides, la question des batteries est devenue majeure dans l'industrie automobile. En effet, les batteries doivent désormais fournir une quantité suffisante d'énergie pour offrir une autonomie suffisante aux véhicules, tout en ayant une durée de vie ne nécessitant pas des changements de batterie trop fréquents. En outre, la masse et l'encombrement de la batterie doivent être limités au regard de son efficacité. Enfin, il est utile que les batteries puissent fonctionner correctement dans toutes les situations de roulage du véhicule, que ce soit en termes de température, d'humidité, ou autres. DE19724020 décrit un bloc batterie comportant un module de batterie et au moins un dispositif de refroidissement selon l'art antérieur.

### BREVE DESCRIPTION DE L'INVENTION

La présente invention vise donc à proposer un bloc batterie présentant un compromis masse / efficacité / encombrement visant à améliorer les performances des batteries actuelles, et présentant également des caractéristiques avantageuses en termes de refroidissement et d'étanchéité.

Ainsi, la présente invention concerne un bloc batterie selon la revendication 1. L'élément de dissipation de chaleur comporte un orifice circulaire dans lequel est positionné le tuyau de chaleur renfermant un fluide. Ce bloc batterie est caractérisé en ce que la solidarisation entre l'élément de dissipation et le tuyau de chaleur est réalisée par étamage. De la même façon, la plaque de collecte de chaleur est également fixée par étamage. Dans une réalisation préférentielle, le fluide contenu dans les tuyaux de chaleur est sous une pression absolue déterminée.

Le principe du dispositif de refroidissement est le suivant : chaque tuyau de chaleur, également appelé caloduc, renferme un fluide, qui se vaporise au niveau des cellules de batterie, sous l'effet de la chaleur émise lors du fonctionnement de la batterie. Ce fluide se diffuse alors dans le caloduc jusqu'au début de l'élément de dissipation, à savoir jusqu'à l'entrée du dispositif de dissipation la plus proche des cellules de batterie. Lorsque le fluide se trouve dans la partie des tuyaux de chaleur positionnée dans l'élément de dissipation, l'air atmosphérique circulant dans cet élément de dissipation permet de refroidir le fluide jusqu'à ce qu'il retourne en phase liquide et retombe vers les cellules de batterie.

Ainsi, pour un bon fonctionnement des caloducs, il est nécessaire que le fluide, après avoir retrouvé la phase liquide, se déplace jusqu'au niveau des éléments à refroidir. Dans le cas où le module batterie est en position verticale, la gravité permet ce déplacement, puisque le fluide en phase liquide est plus lourd qu'en phase gazeuse. On constate alors que, lors d'un fonctionnement de la batterie dans une position autre que la position verticale, le fonctionnement s'en trouve dégradé, puisque la gravité n'agit plus dans une direction parallèle à l'orientation des tuyaux de chaleur, et ne permet donc plus un déplacement du fluide aussi efficace. Pour remédier à cela, plusieurs solutions sont envisageables. Ainsi, dans une réalisation préférentielle, les tubes de chaleur sont rainurés sur leur surface interne dans la direction longitudinale, de manière à augmenter le déplacement du fluide. Dans une autre configuration, il est utile d'installer, à l'intérieur des tuyaux de chaleur, des moyens permettant le déplacement de fluide par capillarité, par exemple un treillis.

L'utilisation d'un procédé d'étamage pour effectuer la solidarisation entre l'élément de dissipation et le tuyau de chaleur, et également au niveau de la plaque de collecte de chaleur permet de diminuer la résistance thermique, et ainsi d'augmenter les performances du dispositif de refroidissement.

Le terme cellule de batterie utilisé ici est équivalent au terme accumulateur électrique, ou élément de batterie. Les cellules de batterie sont, dans un exemple, de forme cylindrique. Toutefois, un bloc batterie selon l'invention peut être utilisé avec des cellules de batterie de toute forme, et de toute puissance.

Dans une réalisation avantageuse, l'élément de dissipation de chaleur comprend un ensemble d'ailettes superposées les unes aux autres sans contact, chacune de ces ailettes comportant un orifice circulaire dans lequel le tuyau de chaleur est positionné. L'empilement est effectué dans la direction longitudinale par rapport aux cellules de batterie. De manière avantageuse, les ailettes de l'élément de dissipation de chaleur ont une forme trapézoïdale. Ces ailettes sont, par exemple en aluminium, mais elles peuvent également être en cuivre ou en un autre matériau métallique.

Dans une autre réalisation avantageuse, le bloc batterie comprend au moins deux modules de batterie, et un boitier étanche entourant les cellules de batterie de l'ensemble des modules. Il est utile que les éléments de dissipation de chaleur soient situés à l'extérieur du boîtier étanche, car sinon le refroidissement ne serait pas possible, puisque la température à l'intérieur du boîtier reste relativement élevée. Dans le cas où l'on souhaite toutefois utiliser un couvercle pour encapsuler l'ensemble, il est utile de prévoir des entrées d'air conséquentes dans ce couvercle.

L'invention concerne également un procédé de fabrication d'un bloc batterie comprenant un module de batterie comportant un ensemble de cellules de batterie et au moins un dispositif de refroidissement, le dispositif comprenant une plaque de collecte de chaleur en contact avec une surface externe d'au moins une cellule de batterie, un tuyau de chaleur en contact avec la plaque de collecte de chaleur, et un élément de dissipation de chaleur, l'élément de dissipation de chaleur comportant un orifice circulaire destiné à accueillir le tuyau de chaleur renfermant un fluide, le procédé comportant les étapes suivantes
- On recouvre l'élément de dissipation de chaleur avec une couche de cuivre,
- On insère le tuyau de chaleur dans l'orifice de l'élément de dissipation,
- On positionne un anneau d'étain sur l'élément de dissipation, autour du tuyau de chaleur,
- On place l'ensemble dans un dispositif de chauffe.

Dans une réalisation avantageuse, le procédé comprend l'étape, avant l'étape d'insertion du tuyau de chaleur, de recouvrir l'élément de dissipation de chaleur et le tuyau de chaleur par une couche d'étain.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 représente un module d'un bloc batterie selon l'invention,
- la figure 2 représente le détail d'une ailette d'un élément de dissipation au sens de la présente invention,
- les figures 3a et 3b représentent un bloc batterie selon l'invention.

### DESCRIPTION DU MEILLEUR MODE DE REALISATION DE L'INVENTION

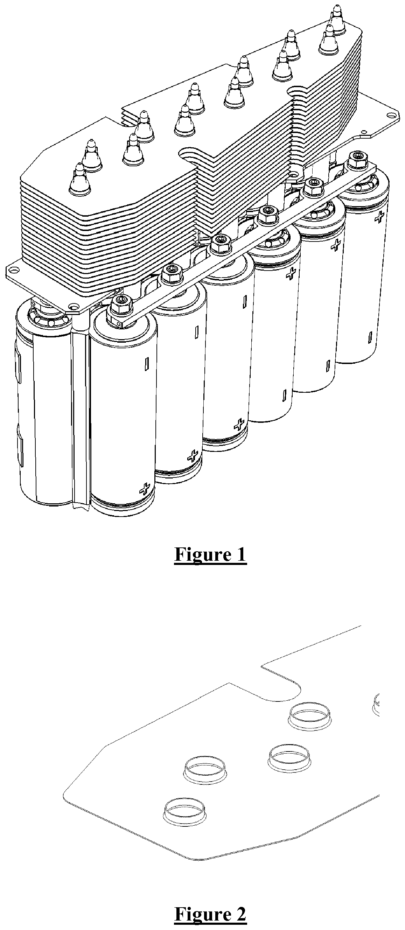

La figure 1 représente un module d'un bloc batterie selon l'invention. Il comprend douze cellules de batterie cylindriques 1, disposées en deux rangées parallèles de six cellules. Il est à noter qu'il est possible d'utiliser des cellules de batterie d'une autre forme, par exemple de section octogonale. Entre ces cellules se trouve une plaque de collecte de chaleur 2. Cette plaque vient au contact d'une partie de la surface externe de chacune des cellules de batterie 1. De manière avantageuse, la plaque vient au contact d'une cellule de batterie sur l'ensemble de sa longueur. En effet, l'augmentation de la surface de contact permet d'augmenter la diffusion de la chaleur diffusée par la cellule de batterie, et donc d'augmenter l'efficacité du dispositif de refroidissement.

Dans le mode de réalisation montré sur cette figure, la plaque de collecte de chaleur 1 est formée de deux plaques solidarisées de manière à former un élément unique, de façon telle que des espaces sont ménagés entre les deux plaques, permettant l'insertion de tuyaux de chaleur 3, également appelés caloducs. Dans un autre exemple, non représenté, on utilise une plaque collectrice de chaleur pour chaque tuyau de chaleur 3, ce qui représente six plaques de collecte de chaleur pour chacune des rangées de cellule.

Le bloc batterie comprend également un élément de dissipation 4 comprenant un ensemble d'ailettes 5 empilées les unes sur les autres et espacées de façon telle à permettre le passage d'air entre deux ailettes. Ces ailettes sont respectivement percées de plusieurs orifices alignés les uns aux autres, permettant de positionner chacun des tuyaux de chaleur 3 dans l'élément de dissipation de chaleur.

Dans un exemple de réalisation, les ailettes 5 sont en aluminium, les tubes ou tuyaux de chaleur 3 sont en cuivre, et les plaques de collecte de chaleur 2 sont en aluminium. Dans un autre exemple, il est possible de réaliser l'ensemble de ces éléments en cuivre, ce qui permet d'augmenter l'efficacité du dispositif. Toutefois, le cuivre est un matériau plus cher et plus lourd que l'aluminium.

Le nombre d'ailettes 5, également appelées feuillets, est par exemple de vingt. Ce choix résulte d'un compromis efficacité / poids / encombrement. En effet, si le nombre d'ailettes est trop important, les ailettes positionnées en haut de l'empilement son inutiles, car l'ensemble du liquide présent dans les tuyaux de chaleur aura été vaporisé avant de les atteindre. Il est à noter que le terme « haut de l'empilement » désigne ici les ailettes situées le plus loin des cellules de batterie. A l'inverse, si le nombre d'ailettes est trop faible, on assistera à une saturation qui rendra une condensation totale impossible, et qui réduira donc l'efficacité du dispositif.

Dans un mode de réalisation préférentiel, la solidarisation entre les ailettes 5 et les tubes de chaleur 3 est réalisée par un procédé d'étamage, qui va être décrit en s'appuyant sur la figure 2. Dans une première étape, les tubes en cuivre 3 sont recouverts d'une couche d'étain, par exemple d'une épaisseur de cinq microns. Les ailettes en aluminium 5, dont une est montrée sur la figure 2, sont recouvertes d'une couche de cuivre, par exemple d'une épaisseur de dix microns, puis d'une couche d'étain, par exemple d'une épaisseur de cinq microns Il est à noter que l'étape de recouvrir les tubes 3 et les ailettes 5 d'étain n'est pas indispensable.

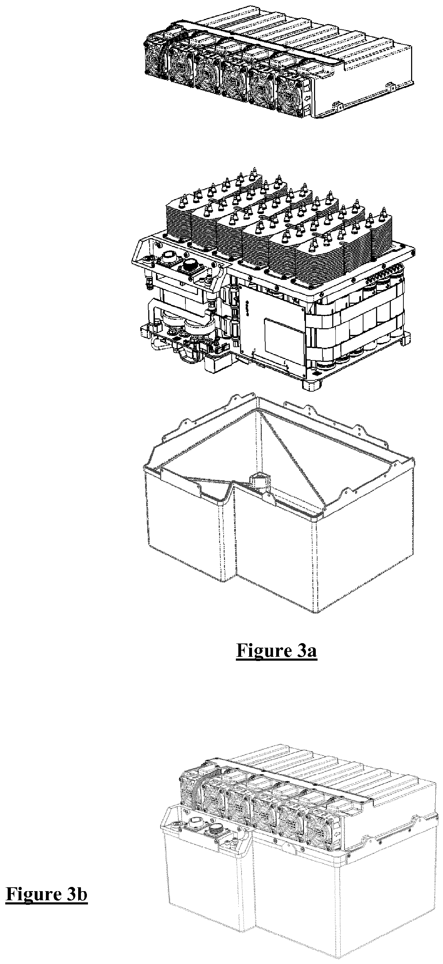

Dans une deuxième étape, un tube de chaleur 3 (non représenté sur la figure 3) est inséré dans un des orifices 6 ménagé dans l'épaisseur de l'ailette 5. Un anneau d'étain 7 est ensuite, dans une troisième étape positionné autour du tube de chaleur 3. La dernière étape consiste à placer l'ensemble dans un dispositif de chauffe, tel qu'un four, afin de réaliser l'étamage à proprement parler. Ce procédé de fabrication permet de fournir un dispositif dans lequel la conduction thermique est fortement améliorée par rapport aux dispositifs connus. Ainsi, un élément de dissipation de chaleur selon l'invention offre des bonnes performances en termes d'efficacité thermique tout en militant le poids de l'assemblage, du fait de l'utilisation de caloducs en cuivre et d'ailettes en aluminium.

Dans un exemple de réalisation préférentiel, les ailettes 5 formant l'élément de dissipation ont une forme trapézoïdale, permettant une meilleure répartition de l'air frais sur les différents tuyaux de chaleur 3. En effet, l'air entrant au niveau du point d'entrée 10 (voir figure 3), traverse toute l'ailette dans le sens longitudinal avant d'atteindre les tuyaux de chaleur les plus éloignés de ce point d'entrée. Or, l'air se réchauffe au contact des premiers tuyaux de chaleur 3 rencontrés sur son parcours, et il permet donc un refroidissement moins efficace lorsqu'il atteint les derniers tuyaux de chaleur.

Pour remédier à cela, on utilise une forme trapézoïdale, de façon que l'air entrant dans les ailettes au niveau du point d'entrée 11 pénètre directement dans la partie des ailettes situées à l'arrière du bloc (les termes avant et arrière sont ici entendus au sens du parcours de l'air) sans avoir été réchauffé puisqu'il n'a été en contact avec aucun tuyau de chaleur. Ainsi, l'homogénéité des températures entre les différentes cellules de batterie est améliorée.

Par ailleurs, dans une configuration avantageuse, un bloc batterie selon l'invention comprend plusieurs modules de batterie tels que celui montré en figure 1. Ainsi, sur l'exemple des figures 3a et 3b, six modules de batterie sont positionnés côte à côte pour former le bloc batterie 20. Il est à noter que la figure 3a montre une vue éclatée du bloc représenté en figure 3b. Le bloc comprend un boîtier 21 qui entoure les cellules de batteries afin de rendre l'ensemble étanche, surmonté d'un couvercle 25 formant plaque système. Ainsi, les cellules de batterie sont reliées directement à cette plaque système, ce qui permet de supprimer les connexions filaires et ainsi de diminuer l'encombrement du dispositif.

En outre, l'étanchéité du boîtier permet une utilisation de la batterie dans des conditions extrêmes, notamment lorsqu'elle est utilisée dans un véhicule automobile. Le bloc batterie 20 comprend par ailleurs des connecteurs électriques 24 permettant le branchement de la batterie dans un véhicule ou tout autre dispositif la mettant en oeuvre. Ces connecteurs sont choisis de manière à ne pas altérer l'étanchéité de l'ensemble.

Les éléments de dissipation de chaleur sont situés au-dessus de ce boîtier 21, et fixés grâce à des supports mécaniques 22. Cette fixation se fait par des moyens de fixation tels que des vis, dont l'installation est permise grâce à des encoches 23 (voir également figure 2), de forme demi-circulaire, ménagées sur les côtés longitudinaux des ailettes. Le positionnement des éléments de dissipation de chaleur en dehors du boîtier étanche ne pose pas de problème puisqu'il n'y a pas de fluide circulant dans ces éléments. En effet, le fluide servant au transport de calories est enfermé dans les tuyaux de chaleur. Les tuyaux de chaleur sont par exemple fermés par soudure, ce qui permet d'éviter l'utilisation d'un joint de type plat ou torique pour garantir l'étanchéité. Un tel dispositif permet ainsi d'éviter toute fuite et ainsi de ne pas dégrader la sécurité de l'équipement mettant en oeuvre un bloc batterie selon l'invention.

Par ailleurs, dans un exemple de configuration, un couvercle supplémentaire 26 est utilisé pour entourer les éléments de dissipation de chaleur. Ce couvercle 26 comprend des entrées d'air 27 permettant de laisser pénétrer l'air atmosphérique entre les ailettes 5 des éléments de dissipation.

Ainsi, la présente invention propose un bloc batterie étanche et compact, muni de moyens permettant de refroidir de manière homogène les cellules de batterie.

## Revendications

1. Bloc batterie comportant un module de batterie comportant un ensemble de cellules de batterie et au moins un dispositif de refroidissement, le dispositif comprenant une plaque de collecte de chaleur en contact avec une surface externe d'au moins une cellule de batterie, un tuyau de chaleur en contact avec la plaque de collecte de chaleur, et un élément de dissipation de chaleur, **caractérisé en ce que** l'élément de dissipation de chaleur comporte un orifice circulaire dans lequel est positionné le tuyau de chaleur renfermant un fluide, et **en ce que** la solidarisation entre l'élément de dissipation et le tuyau de chaleur est réalisée par étamage, le bloc batterie étant tel que l'élément de dissipation de chaleur comprend un ensemble d'ailettes superposées les unes aux autres sans contact, les ailettes ayant une forme trapézoïdale.

2. Bloc batterie selon la revendication 1, dans lequel chacune des ailettes comportent un orifice circulaire dans lequel le tuyau de chaleur est positionné.

3. Bloc batterie selon l'une des revendications précédentes, dans lequel le tuyau de chaleur comporte, sur sa surface interne, des rainures orientées longitudinalement.

4. Bloc batterie selon l'une des revendications précédentes, dans lequel le tuyau de chaleur est muni de moyens permettant le déplacement du fluide par capillarité.

5. Bloc batterie selon l'une des revendications précédentes, comprenant au moins deux modules de batterie, et un boitier étanche entourant les cellules de batterie de l'ensemble des modules.

6. Bloc batterie selon la revendication 5, dans lequel les éléments de dissipation de chaleur sont situés à l'extérieur du boîtier étanche.

7. Procédé de fabrication d'un bloc batterie comprenant un module de batterie comportant un ensemble de cellules de batterie et au moins un dispositif de refroidissement, le dispositif comprenant une plaque de collecte de chaleur en contact avec une surface externe d'au moins une cellule de batterie, un tuyau de chaleur en contact avec la plaque de collecte de chaleur, et un élément de dissipation de chaleur, l'élément de dissipation de chaleur comprenant un ensemble d'ailettes superposées les unes aux autres sans contact, les ailettes ayant une forme trapézoïdale, et comportant également un orifice circulaire destiné à accueillir le tuyau de chaleur renfermant un fluide, le procédé comportant les étapes suivantes :
- On recouvre l'élément de dissipation de chaleur avec une couche de cuivre,
- On insère le tuyau de chaleur dans l'orifice de l'élément de dissipation,
- On positionne un anneau d'étain sur l'élément de dissipation, autour du tuyau de chaleur,
- On place l'ensemble dans un dispositif de chauffe.

8. Procédé selon la revendication 7, comprenant l'étape, préalablement à l'insertion du tuyau de chaleur, de recouvrir le tuyau de chaleur et l'élément de dissipation par une couche d'étain.

## Patentansprüche

1. Batteriepack, der ein Batteriemodul aufweist, das eine Einheit von Batteriezellen und mindestens eine Kühlvorrichtung aufweist, wobei die Vorrichtung eine Wärmesammelplatte in Kontakt mit einer Außenfläche mindestens einer Batteriezelle, ein Wärmerohr in Kontakt mit der Wärmesammelplatte und ein Wärmeableitungselement enthält, **dadurch gekennzeichnet, dass** das Wärmeableitungselement eine kreisförmige Öffnung aufweist, in der das ein Fluid umschließende Wärmerohr positioniert ist, und dass die feste Verbindung zwischen dem Ableitungselement und dem Wärmerohr durch Verzinnen erfolgt, wobei der Batteriepack so ist, dass das Wärmeableitungselement eine Einheit von Rippen enthält, die kontaktlos übereinander angeordnet sind, wobei die Rippen eine Trapezform haben

2. Batteriepack nach Anspruch 1, wobei jede der Rippen eine kreisförmige Öffnung aufweist, in der das Wärmerohr positioniert ist.

3. Batteriepack nach einem der vorhergehenden Ansprüche, wobei das Wärmerohr auf seiner Innenfläche längs ausgerichtete Rillen aufweist.

4. Batteriepack nach einem der vorhergehenden Ansprüche, wobei das Wärmerohr mit Einrichtungen versehen ist, die die Bewegung des Fluids durch Kapillarwirkung ermöglichen.

5. Batteriepack nach einem der vorhergehenden Ansprüche, der mindestens zwei Batteriemodule und ein dichtes Gehäuse enthält, das die Batteriezellen der Einheit der Module umgibt.

6. Batteriepack nach Anspruch 5, wobei die Wärmeableitungselemente sich außerhalb des dichten Gehäuses befinden.

7. Verfahren zur Herstellung eines Batteriepacks, der ein Batteriemodul enthält, das eine Einheit von Batteriezellen und mindestens eine Kühlvorrichtung aufweist, wobei die Vorrichtung eine Wärmesammelplatte in Kontakt mit einer Außenfläche mindestens einer Batteriezelle, ein Wärmerohr in Kontakt mit der Wärmesammelplatte, und ein Wärmeableitungselement enthält, wobei das Wärmeableitungselement eine Einheit von Rippen enthält, die kontaktlos übereinander angeordnet sind, wobei die Rippen eine Trapezform haben, und ebenfalls eine kreisförmige Öffnung aufweist, die dazu bestimmt ist, das ein Fluid umschließende Wärmerohr aufzunehmen, wobei das Verfahren die folgenden Schritte aufweist:
- das Wärmeableitungselement wird mit einer Kupferschicht bedeckt,
- das Wärmerohr wird in die Öffnung des Ableitungselements eingeführt,
- ein Zinnring wird auf dem Ableitungselement um das Wärmerohr herum positioniert,
- die Einheit wird in einer Heizvorrichtung platziert.

8. Verfahren nach Anspruch 7, das vor dem Einführen des Wärmerohrs den Schritt des Bedeckens des Wärmerohrs und des Ableitungselements mit einer Zinnschicht enthält.

## Claims

1. Battery pack having a battery module having a set of battery cells and at least one cooling device, the device comprising a heat collecting plate in contact with an outer surface of at least one battery cell, a heat duct in contact with the heat collecting plate, and a heat dissipating element, **characterized in that** the heat dissipating element has a circular orifice in which the heat duct is positioned containing a fluid, and **in that** the connection between the heat dissipating element and the heat duct is established by tinning, the battery pack being such that the heat dissipating element comprises a set of fins arranged one above the other without contact, the fins having a trapezoidal form.

2. Battery pack according to Claim 1, in which each of these fins have a circular orifice in which the heat duct is positioned.

3. Battery pack according to one of the preceding claims, in which the heat duct has, on its inner surface, grooves oriented longitudinally.

4. Battery pack according to one of the preceding claims, in which the heat duct is provided with means that enable the displacement of the fluid by capillary action.

5. Battery pack according to one of the preceding claims, comprising at least two battery modules, and an airtight casing surrounding the battery cells of the set of modules.

6. Battery pack according to Claim 5, in which the heat dissipating elements are located outside the airtight casing.

7. Method for producing a battery pack comprising a battery module having a set of battery cells and at least one cooling device, the device comprising a heat collecting plate in contact with an outer surface of at least one battery cell, a heat duct in contact with the heat collecting plate, and a heat dissipating element, the heat dissipating element having a circular orifice intended to accommodate the heat duct containing a fluid, the method having the following steps:
- covering the heat dissipating element with a layer of copper,
- inserting the heat duct into the orifice in the dissipating element,
- positioning a tin ring on the dissipating element, around the heat duct,
- placing the assembly in a heating device.

8. Method according to Claim 7, comprising the step, prior to inserting the heat duct, of covering the heat duct and the dissipating element by a layer of tin.
